# EUROPÄISCHE PATENTSCHRIFT

(11) **EP 0 418 656 B1**
(45) Veröffentlichungstag und Bekanntmachung des Hinweises auf die Patenterteilung: **22.12.1993**
(21) Anmeldenummer: 90117098.5
(22) Anmeldetag: 05.09.1990
(51) Int. Cl.: C21C 5/52, F27D 3/16, C22B 9/10

(54) **Verfahren und Vorrichtung zum zumindest zeitweise gleichzeitigen Beaufschlagen einer Metallschmelze mit einem Gas und feinkörnigen Feststoffen**
Process and installation for intermittant simultaneous addition of gases and fine-grained solids into a melt
Procédé et appareillage pour l'introduction simultanée dans un métal à l'état liquide d'un gaz et de granules de matières solides

(30) Priorität: 20.09.1989 DE 3931392
(43) Veröffentlichungstag der Anmeldung: 27.03.1991
(73) Patentinhaber: FUCHS SYSTEMTECHNIK GMBH, D-77731 Willstätt-Legelshurst (DE)
(72) Erfinder: Knapp, Hubert, D-7580 Bühl (DE); Hoffmann, Peter, D-5830 Schwelm (DE)
(74) Vertreter: Blumbach, Kramer & Partner

(56) Entgegenhaltungen:
- FR-A- 1 304 418
- FR-A- 2 489 841
- GB-A- 1 161 808
- GB-A- 2 115 011
- PATENT ABSTRACTS OF JAPAN, vol. 8, no. 218 (C-245)[1655], 4. Oktober 1984; & JP-A-59 104 419 (DAIDO TOKUSHOKU K.K.) 16-06-1984

## Beschreibung

Die Erfindung bezieht sich auf ein Verfahren zum Beaufschlagen einer Metallschmelze in einem metallurgischen Gefäß mit einem Gas und feinkörnigen Feststoffen, mit einer wassergekühlten ersten Lanze zur Zufuhr des Gases und eine Vorrichtung zur Durchführung des Verfahrens.

Es ist beispielsweise bekannt, einer Metallschmelze über eine wassergekühlte erste Lanze Sauerstoff zur Verbrennung von Kohlenstoff oder kohlenstoffhaltigen Verbindungen zuzuführen. Eine derartige Lanze kann dabei bedarfsweise manuell oder über einen steuerbaren Manipulator in das Gefäß eingebracht und innerhalb diesem in vorgebbarer Weise angeordnet oder bewegt werden. Es ist ferner bekannt, eine Metallschmelze z.B. zum Aufkohlen oder für eine Energiezufuhr bzw. die Unterstützung einer Schlackenbildung oberhalb der Metallschmelze beispielsweise mit feinkörnigem Kohlenstoff zu beaufschlagen. Weiterhin ist es bekannt, eine Metallschmelze zur Unterstützung einer Schaumschlackenbildung mit feinkörnigen Feststoffen, wie beispielsweise Kalk, Dolomit oder Bauxit oder dergl. als Schlackenbildner zu beaufschlagen. Bei dem bekannten Verfahren werden die Feststoffe beispielsweise über eine Deckelöffnung des Gefäßes oder über eine Arbeitstür durch pneumatische Förderung zugeführt. Diese Vorgehensweise hat den Nachteil, daß nur ein Teil der zugeführten Feststoffe in den Bereich der Metallschmelze bzw. der darüber gebildeten Schlackenschicht gelangt. Dies führt zum einen zu einem hohen Verbrauch an Feststoffen und zum anderen dazu, daß die durch den Einsatz der Feststoffe angestrebte Wirkung nur unvollständig oder verzögert eintritt. Durch Verbrennung flüchtiger Bestandteile der zugeführten feinkörnigen Feststoffe kann es weiterhin in dem Gefäß zu einer unerwünschten Gasentwicklung kommen, was wiederum dazu führen kann, daß zugeführte Feststoffe ohne in den Bereich der Metallschmelze zu gelangen, zusammen mit Gas das Gefäß verlassen. Eine unerwünschte Folge davon ist neben einem Energieverlust beispielsweise auch eine zusätzliche Belastung einer dem Gefäß nachgeordneten Entstaubungs- bzw. Filteranlage.

Es ist ferner bekannt (DE-AS 25 20 883) Kohlenstaub und Sauerstoff über Düsen in die Metallschmelze einzubringen. die Düsen sind in dem Gefäß fest angeordnet. Sauerstoff und Kohlenstaub können deshalb während der Durchführung des Verfahrens nicht gezielt bestimmten Bereichen der Metallschmelze zugeführt werden. Aus Sicherheitsgründen ist die Durchsatzkapazität von im Boden des Gefäßes angeordneten Düsen begrenzt und es kann ferner über derartige Düsen die Schlackebildung nur bedingt beeinflußt werden.

Der Erfindung liegt die Aufgabe zugrunde, ein Verfahren zu schaffen, bei dem ein vorgebbarer Oberflächenbereich einer Metallschmelze gezielt und im wesentlichen unverzögert mit Gas und feinkörnigen Feststoffen beaufschlagbar ist, ohne daß während der Zufuhr von Feststoffen ein Teil davon durch Abwandern in, der Metallschmelze entfernt gelegene Bereiche des Gefäßes, verlorengeht. Der Erfindung liegt weiter die Aufgabe zugrunde, eine Vorrichtung zur Durchführung dieses Verfahrens zu schaffen.

Betreffend das Verfahren wird die Aufgabe erfindungsgemäß dadurch gelöst, daß bei einem Verfahren der genannten Gattung die Feststoffe als Förderstrom über eine zweite Lanze so zugeführt werden, daß sie nach dem Verlassen der Austrittsöffnung der zweiten Lanze von aus der Austrittsöffnung der ersten Lanze austretendem Gas umgelenkt und mit diesem der Metallschmelze zugeführt werden.

Durch die Verwendung einer zweiten Lanze zur Zufuhr der Feststoffe als Förderstrom kann die Metallschmelze gezielt, und ohne daß wesentliche Anteile der zugeführten Feststoffe an die Umgebung innerhalb des Gefäßes verlorengehen, zugeführt werden. Eine gezielte Beaufschlagung der Metallschmelze, beispielsweise in einem begrenzten örtlichen Bereich und mit einer Eindringtiefe in die Metallschmelze wird dadurch erreicht, daß der Förderstrom nach dem Austritt aus der zweiten Lanze von dem Gas umgelenkt und mit diesem der Metallschmelze zugeführt wird. Die Zufuhr der Feststoffe zusammen mit dem Gas führt ferner dazu, daß bereits während des Beaufschlagens Gase und Feststoffe vermischt werden, was den Ablauf chemischer Reaktionen zwischen dem Gas und den Feststoffen bzw. mit der Metallschmelze oder der Schlackenschicht erleichtert.

Es hat sich dabei als vorteilhaft erwiesen, daß das Gas mit einer im Überschallbereich liegenden Geschwindigkeit aus der ersten Lanze austritt. Besonders vorteilhaft ist es dabei, daß das Gas mit etwa 2,5-facher Schallgeschwindigkeit austritt. Zuzuführende Feststoffe werden dabei besonders gut von dem Gas mittransportiert und beispielsweise durch eine ausgebildete Schlackenschicht an die Oberfläche der Metallschmelze bzw. in einen Bereich innerhalb der Metallschmelze mitgeführt. Es kann dabei beispielsweise eine Eindringtiefe von etwa 5 cm bis 8 cm erreicht werden.

Der Feststoffstrom, der beispielsweise Luft oder ein Inertgas als Transportmedium aufweisen kann, tritt vorteilhafterweise mit einer Geschwindigkeit von 20 m/s bis 50 m/s aus der Austrittsöffnung der zweiten Lanze aus. Die Feststoffe werden dann in Richtung des Gases von dem Transportmedium mitgenommen. Dieses kann, ohne der Metallschmelze zugeführt zu werden, in einen oberhalb dieser gelegenen Bereich des Gefäßes entweichen, so daß es den Ablauf der chemischen Reaktionen im Bereich der Metallschmelze nicht beeinflußt.

Zum Frischen einer Metallschmelze wird als Gas Sauerstoff zugeführt.

Abhängig von der angestrebten Wirkung können als Feststoffe feinkörniger Kohlenstoff oder feinkörnige Schlackenbildner, wie Kalk, Kalkstein, Bauxit, Dolomit und/oder metallurgische Mittel zur Behandlung der Metallschmelze zugeführt werden.

Als vorteilhaft hat es sich herausgestellt, daß als Feststoffe Hüttenstäube, wie beispielsweise unbehandelte Filterstäube und/oder Zunder oder unreduzierte Erze bzw. deren Sinterprodukte zuführbar sind. Derartige Stäube fallen beispielsweise bei der Herstellung und metallurgischen Verarbeitung von Eisen, Stahl und anderen Metallen in großen Mengen an und müssen üblicherweise, beispielsweise nachdem sie zunächst pelletiert worden sind, in aufwendigen und kostenintensiven Verfahren beseitigt werden. Mit dem erfindungsgemäßen Verfahren können derartige Stäube in einfacher Weise bei metallurgischen Behandlungen wieder verwendet werden.

Zur Durchführung des Verfahrens hat es sich als besonders günstig herausgestellt, daß die Feststoffe eine Korngröße von etwa 0,01 mm bis 1 mm aufweisen.

Für die Durchführung des Verfahrens hat es sich weiter als vorteilhaft erwiesen, daß über eine dritte Lanze ein weiteres Gas und/oder weitere feinkörnige Feststoffe zuführbar sind. Dabei hat es sich als besonders vorteilhaft herausgestellt, daß eine Gasströmung oder ein Förderstrom aus der dritten Lanze im wesentlichen unbeeinflußt von dem aus der erste Lanze austretenden Gas und dem aus der zweiten Lanze austretenden Förderstrom austreten kann.

Als besonders vorteilhaft hat es sich dabei ferner herausgestellt, daß über die dritte Lanze Sauerstoff im wesentlichen einem Bereich unmittelbar oberhalb des Badspiegels der Metallschmelze und innerhalb einer darüber liegenden Schlackenschicht zuführbar ist. Unabhängig von der Beaufschlagung durch die erste und zweite Lanze kann damit für eine gezielte Nachverbrennung von Kohlenmonoxyd in einem der Metallschmelze benachbarten Bereich Sauerstoff bereitgestellt und die bei der Nachverbrennung gewonnene Wärmemenge unmittelbar der Metallschmelze zugeführt werden.

Es ist schließlich vorteilhaft, daß Gas und/oder Feststoffe über eine oder mehrere Lanzen intermittierend zugeführt werden. Damit können Gas und/oder Feststoffe abhängig von der Art der durchzüfuhrenden Behandlung bzw.dem Zustand der Metallschmelze bzw. von in dem Gefäß vorhandenem, noch nicht geschmolzenem Schrott gezielt zugeführt werden.

Ist das metallische Gefäß Teil eines Lichtbogenofens, dann kann das erfindungsgemäße Verfahren gemäß einem oder mehreren der obengenannten Verfahrensschritte besonders vorteilhaft eingesetzt werden. Es ist damit nämlich möglich, sehr schnell eine ausreichend hohe Schaumschlackenschicht zu bilden und damit den Lichtbogen gegenüber den Wänden des Ofengefäßes abzuschirmen, wodurch die Wärmeverluste reduziert werden. Durch die gezielte und hinsichtlich der Dosierung gut steuerbare Zufuhr von feinkörniger Kohlen als Brennstoff kann ferner der Verbrauch an elektrischer Energie weiter spürbar gesenkt werden.

Für die Durchführung des Verfahrens nach einem oder mehreren der obengenannten Merkmale hat sich die in Anspruch 15 gekennzeichnete Vorrichtung als vorteilhaft herausgestellt, bei der die erste und die zweite Lanze miteinander derart verbunden sind, daß die Austrittsöffnungen beider Lanzen unter einem vorgebbaren Winkel zueinander geneigt verlaufen. Damit ist in einfacher Weise sichergestellt, daß die Feststoffe nach dem Austritt aus der zweiten Lanze von dem aus der ersten Lanze austretenden Gas umgelenkt und mit diesem gezielt einem Bereich der Metallschmelze zugeführt werden.

In vorteilhafter Weise können eine erste, zweite und dritte Lanze über eine Öffnung in das metallurgische Gefäß eingeführt werden. Die Lanzen können dabei mit einem Manipulator verbunden sein, und über diesen gezielt zur Beaufschlagung bestimmter Bereiche der Schmelze innerhalb des Gefäßes angeordnet werden.

Lanzen können mit Vorteil aber auch durch Bereiche der Gefäßwand in das Innere des Gefäßes geführt werden. Auf diese Weise können ein oder mehrere Paare von ersten und zweiten Lanzen über den Umfang des Gefäßes verteilt angeordnet werden. Derartige Lanzen können an der Gefäßwand festgelegt, oder gegenüber dieser in ihrer Lage einstellbar angeordnet werden. Durch die Lanzen, zumindest teilweise gegenüber dem Innern des Gefäßes, abschirmende Kühlrohre kann in vorteilhafter Weise eine direkte Wärmeeinwirkung durch den Lichtbogen und die Schmelze vermieden werden. Dabei können sowohl an der Gefäßwand als auch einem Manipulator angeordnete Lanzen mit einer eigenen Kühlummantelung versehen sein.

Weitere vorteilhafte Ausgestaltungen betreffend die Vorrichtung enthalten die Ansprüche 16 bis 25.

Ein Beispiel für das erfindungsgemäße Verfahren und zwei Ausführungsbeispiele für eine Vorrichtung zur Durchführung dieses Verfahrens sind anhand der Zeichnung mit weiteren Einzelheiten erläutert.

Es zeigen jeweils in unvollstandiger schematischer Darstellung
- Fig. 1: eine teilweise geschnittene, Vorderansicht eines Lichtbogenofens mit einer erfindungsgemäßen Vorrichtung gemäß einem ersten Ausführungsbeispiel und
- Fig. 2: eine Draufsicht auf den Lichtbogenofen nach Fig. 1 und die Vorrichtung nach Fig. 1 in einer Ausgangs- und einer Betriebslage,
- Fig. 3: eine teilweise geschnittene Seitenansicht eines Lichtbogenofens mit einer erfindungsgemäßen Vorrichtung gemäß einer zweiter Ausführungsform,
- Fig. 4: eine unvollständige Vorderansicht der Vorrichtung nach Fig. 3, und
- Fig. 5: eine Draufsicht auf die Vorrichtung nach den Figuren 3 und 4.

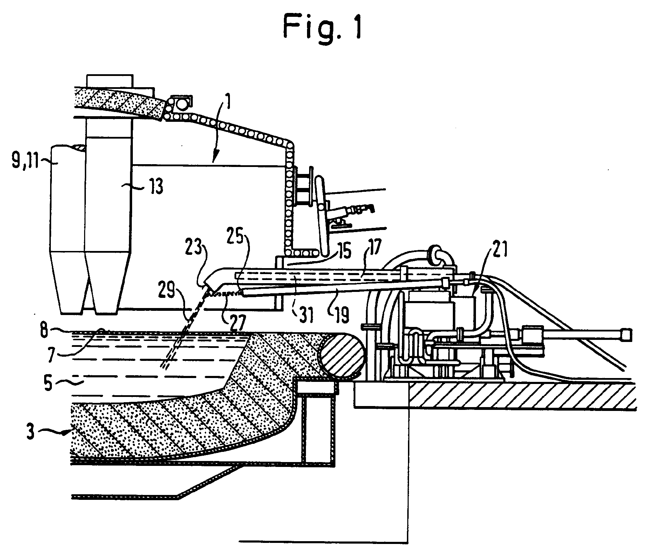

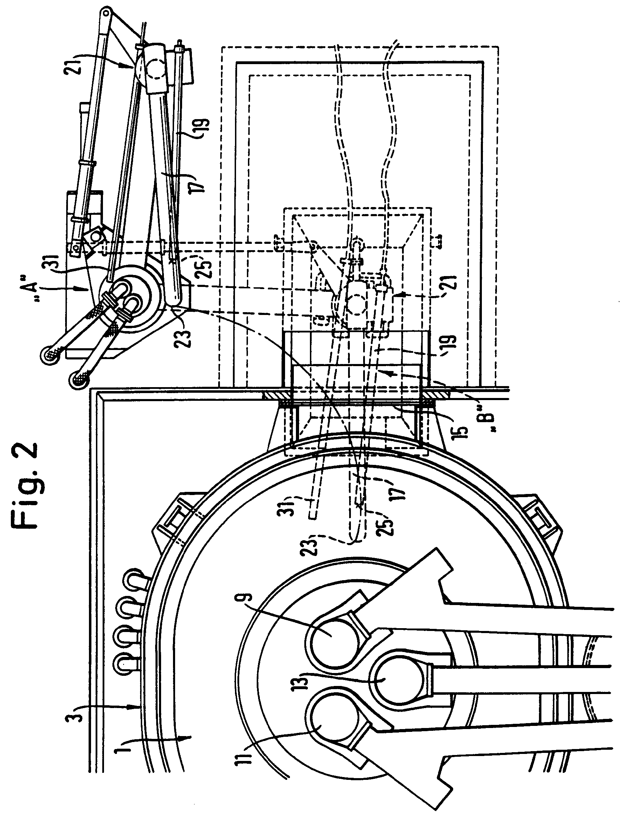

Bei dem in den Fig. 1 und 2 beschriebenen ersten Ausführungsbeispiel enthält ein insgesamt mit 1 bezeichneter Lichtbogenofen ein Schmelzgefäß 3 in dem sich eine Metallschmelze 5 befindet, auf deren Oberfläche 7 eine nicht näher dargestellte Schlackenschicht 8 ausgebildet ist. Oberhalb der Oberfläche 7 sind vorliegend drei Elektroden 9, 11 und 13 dargestellt, die in bekannter und deshalb nicht beschriebener Weise an Tragarmen gehaltert und über Öffnungen in einem Deckel des Gefäßes 3 in dessen Inneres geführt werden können.

Das Gefäß 3 hat seitlich eine Öffnung 15 über die eine erste und zweite Lanze 17, 19 in einen Bereich innerhalb des Gefäßes 3 geführt werden können. Die beiden Lanzen 17, 19 sind in fester Zuordnung zueinander mit einem insgesamt mit 21 bezeichneten Manipulator verbunden, mit dem sie in bekannter und deshalb nicht näher beschriebener Weise in das Gefäß 3 ein - bzw. ausgefahren werden können und mit dem sie innerhalb des Gefäßes 3 um eine vertikale und eine horizontale Achse bereichsweise geschwenkt werden können.

Die erste und zweite Lanze 17, 19 können somit ebenso wie eine dritte Lanze 31, auf die im folgenden noch eingegangen wird, aus der in Fig. 2 mit "A" bezeichneten Ausgangslage in der sie gänzlich außerhalb des Gefäßes 3 sind, in die mit "B" bezeichnete Betriebslage bewegt werden, in der sie durch die Öffnung 15 in das Gefäß 3 ragen.

Die beiden Lanzen 17, 19 sind wassergekühlt und die oberhalb gelegene erste Lanze 17, die im wesentlichen in einer horizontalen Ebene liegt, dient der Zufuhr eines Gases, beispielsweise vom Sauerstoff. Die Austrittsöffnung 23 ist gegenüber dem restlichen Bereich der ersten Lanze 17 nach unten in Richtung auf die Metallschmelze 5 um etwa 45° abgewinkelt. Die zweite Lanze 19 ist im wesentlichen geradlinig ausgebildet und gegenüber der ersten Lanze 17 sowohl in horizontaler Richtung als auch in vertikaler Richtung geneigt so angeordnet, daß sich ihre Austrittsöffnung 25 im wesentlichen in einer gemeinsamen vertikalen Ebene unterhalb der Austrittsöffnung 23 der ersten Lanze 17 befindet. Die Austrittsöffnung 25 endet mit Abstand vor der Austrittsöffnung 23, so daß bei fester Zuordnung der Austrittsöffnungen 23, 25 zueinander die Austrittsöffnung 23 der ersten Lanze 17 stets weiter in das Gefäß 3 ragt als dies bei der Austrittsöffnung 25 der Fall ist.

Die gegenüber der ersten Lanze 17 mit verkleinertem Durchmesser ausgebildete zweite Lanze 19 dient der Beaufschlagung der Metallschmelze 5 mit feinkörnigen Feststoffen, die beispielsweise mit Luft oder Inertgas als Transportmedien gefördert werden und die die Austrittsöffnung 25 mitgeführt in einem Förderstrom 27 verlassen, der im Anschluß an die Austrittsöffnung 25 im wesentlichen seine Richtung, nämlich die der zweiten Lanze 19 beibehält. Der Förderstrom 27 verläuft bei der vorliegenden Anordnung der zweiten Lanze 19 gegenüber einer horizontalen Ebene um etwa 10° nach unten geneigt.

Das aus der Austrittsöffnung 23 ausströmende Gas 29 verläßt diese im wesentlichen unter Beibehaltung seiner Richtung innerhalb der Austrittsöffnung 23. Die Richtung des aus der Austrittsöffnung 23 austretenden Gases 29 ist somit derart, daß es unter einem gegenüber einer Vertikalen geneigten Winkel auf der Oberfläche 7 in einem in Richtung auf das Innere des Gefäßes 3 vor der Austrittsöffnung 23 bzw. der ersten und zweiten Lanze 17, 19 gelegenen Bereich auftrifft. Die Geometrie der Anordnung der ersten und zweiten Lanze 17, 19 bzw. der jeweils zugehörigen Austrittsöffnungen 23, 25 führt somit zu Richtungen des Gases 29 bzw. des Förderstromes 27, gemäß denen letzterer in einer der Austrittsöffnung 23 benachbarten Region auf das Gas 29 trifft. Aufgrund der höheren Geschwindigkeit des Gases 29, die durch eine nicht dargestellte, am Ende der Lanze 17 angeordnete Düse, beispielsweise eine Laval-Düse, erzeugt wird, werden die in dem Förderstrom 27 enthaltenen feinkörnigen Feststoffe in Richtung des Gases 29 umgelenkt und mit diesem zur Beaufschlagung der Metallschmelze 5 auf die Oberfläche 7 gefördert. Die Richtung des Gases 29 bleibt dabei im wesentlichen unbeeinflußt. Das in dem Förderstrom 27 enthaltene Transportmedium wird von dem Gas 29 nur zu einem geringen Teil mitgenommen und kann überwiegend in den oberhalb der Oberfläche 7 gelegenen Bereich des Gefäßes 3 entweichen. Damit ist sichergestellt, daß das Transportmedium die chemischen Reaktionen zwischen dem Gas 29 und den Feststoffen mit der Metallschmelze 5 bzw. der Schlacke im wesentlichen unbeeinträchtigt läßt.

Wird, wie bei dem vorliegenden Beispiel, nicht nur ein Durchtritt des Gases 29 mit dem mitgeführten Feststoff durch die Schlackenschicht 8, sondern auch noch ein Eindringen in die Metallschmelze 5 durch die Oberfläche 7 angestrebt, dann sollte das Gas 29 die Austrittsöffnung 23 mit einer im Überschallbereich liegenden Geschwindigkeit, beispielsweise der 2,5-fachen Schallgeschwindigkeit verlassen. Demgegenüber ist die Geschwindigkeit des Förderstromes 27 wesentlich geringer; sie kann beispielsweise im Bereich von 20 m/s bis 50 m/s liegen.

Durch die Anordnung der ersten und zweiten Lanze 17, 19 kann beispielsweise Sauerstoff zusammen mit Kohlenstoff als feinkörnigem Feststoff einem örtlich begrenztem Bereich der Metallschmelze 5 oberhalb der Oberfläche 7 zugeführt werden; die Eindringtiefe in die Metallschmelze 5 kann dabei abhängig von der Geschwindigkeit des Gases 29, der bereits ausgebildeten Schlackenschicht 8 und dem Abstand, mit dem die erste und zweite Lanze 17, 19 oberhalb der Oberfläche 7 angeordnet sind bis zu mehrere Zentimeter, beispielsweise unter den o.a. Strömungsverhältnissen etwa 5 cm bis 8 cm betragen. Es kann bei einer kontinuierlichen Zufuhr von Sauerstoff über die erste Lanze 17 Kohlenstoff bedarfsweise bzw. abhängig vom Zustand der Metallschmelze 5 intermittierend über die zweite Lanze 19 beispielsweise zur Förderung der Schlackebildung bzw. zum Schäumen der Schlacke oder als zusätzlicher Energieträger gezielt eingebracht werden.

Nach einer Ausrichtung der Lanzen 17, 19 auf noch nicht oder noch nicht vollständig geschmolzene Schrottzugaben kann eine gezielte Zufuhr von Kohlenstoff zu einem raschen Einschmelzen bzw. einer Unterstützung eines Schneidbrennvorgangs im Schrott durch den über die erste Lanze 17 zugeführten Sauerstoff führen.

Durch das erfindungsgemäße Verfahren ist somit neben einem innerhalb des Gefäßes 3 örtlich vorgebbaren Beaufschlagen mit einem Gas 29 und feinkörnigen Feststoffen eine bedarfsabhängige Dosierung zugeführter feinkörniger Feststoffe möglich, wobei durch die Mitnahme der Feststoffe durch das Gas 29 sichergestellt ist, daß die zugeführten Feststoffe auch dem gewünschten Bereich der Oberfläche 7 bzw. einem tiefer liegenden Bereich innerhalb der Metallschmelze 5 zugeführt werden, ohne daß es durch Abwandern von Feststoffen in oberhalb der Metallschmelze 5 gelegene Bereiche des Gefäßes 3 zu nennenswerten Verlusten kommt.

Für den Einsatz des erfindungsgemäßen Verfahrens hat es sich als sehr vorteilhaft erwiesen, daß als feinkörnige Feststoffe auch Stäube, wie beispielsweise bei metallurgischen Prozessen anfallende Filterstäube, zuführbar sind. Ohne Zwischenbehandlung können diese wiederverwertet werden, so daß die sonst übliche kostenintensive Beseitigung dieser Stäube entfällt.

Um unabhängig von der ersten und zweiten Lanze 17, 19 ein weiteres Gas oder weitere Feststoffe zuführen zu können, kann es vorteilhaft sein, daß eine weitere, dritte Lanze 31 benachbart der ersten und zweiten Lanze 17, 19 angeordnet wird. Für eine Steuerung einer metallurgischen Behandlung kann es vorteilhaft sein, daß die dritte Lanze 31 unabhängig von den in einer festen Zuordnung zueinander stehenden ersten und zweiten Lanzen 17, 19 bewegbar so angeordnet ist, daß eine aus ihr austretende Gasströmung so gerichtet ist, daß keine wechselseitige Beeinflussung mit dem Förderstrom 27 bzw. dem Gas 29 erfolgt. Durch Einblasen von Sauerstoff über die dritte Lanze 31 in einen unmittelbar oberhalb der Oberfläche 7 der Metallschmelze 5 liegenden Bereich, kann die durch die Nachverbrennung von Kohlenmonoxyd gewonnene Wärmeenergie unmittelbar der Metallschmelze zugeführt werden.

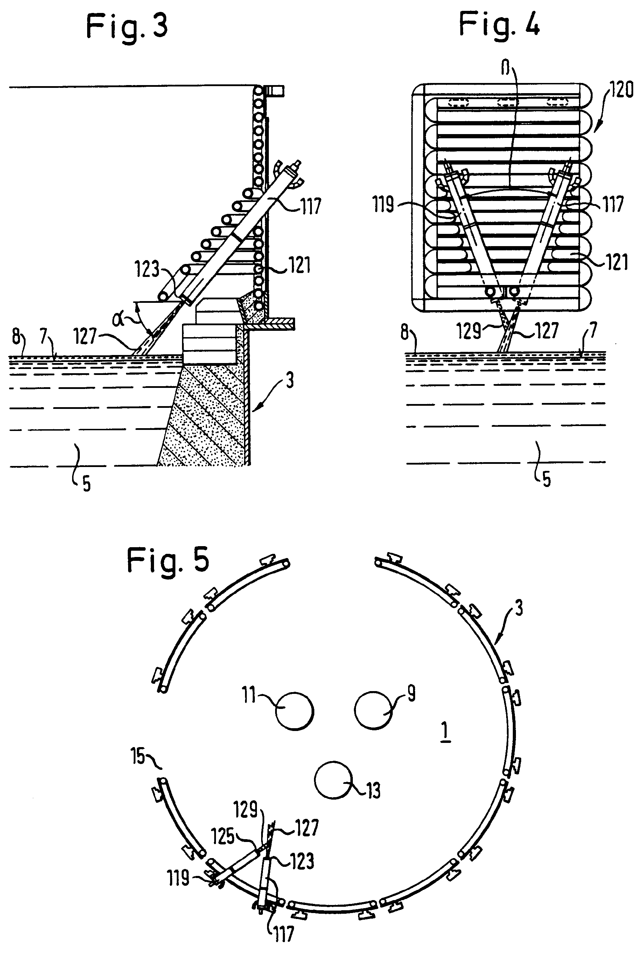

Das in den Fig. 3 bis 5 dargestellte zweite Ausführungsbeispiel unterscheidet sich von dem ersten Ausführungsbeispiel nach den Fig. 1 und 2 im Hinblick auf die Anordnung der ersten und zweiten Lanze 117, 119. Mit dem ersten Ausführungsbeispiel übereinstimmende Teile werden mit gleichen Bezugszeichen versehen, und es wird diesbezüglich eine Beschreibung nicht wiederholt.

Im Gegensatz zu dem ersten Ausführungsbeispiel sind die erste und die zweite Lanze 117, 119 nicht im wesentlichen horizontal angeordnet und über die Öffnung 15 in das Innere des Gefäßes 3 geführt. Beide Lanzen 117, 119 werden vielmehr unter einem Winkel α zu einer horizontalen Ebene (Fig. 3) in entsprechender Zuordnung zueinander durch ein oberhalb der Schmelze 5 angeordnetes Seitenwandpanel 120 der Wandung des Schmelzgefäßes 3 geführt. In dem Seitenwandpanel 120 sind, die beiden Lanzen 117, 119 teilweise umgebend, Kühlrohre 121 angeordnet. Damit sind die beiden Lanzen 119, 120 zumindest teilweise gegenüber der Wärmeeinwirkung der Lichtbogen bzw. der Schmelze 5 geschützt.

Der Winkel α unter dem die beiden Lanzen 117, 119 gegenüber einer horizontalen Ebene verlaufen, beträgt etwa 50°; damit ist sichergestellt, daß über die Lanzen 117, 119 eingebrachte Gase und feinkörnige Feststoffe die Schlackenschicht 8 gut durchdringen können.

Beide Lanzen 117, 119 sind im wesentlichen geradlinig verlaufend ausgebildet und sie sind vorliegend, jeweils unter etwa dem gleichen Winkel gegenüber einer zwischen den beiden Lanzen 117, 119 verlaufenden Mittelebene verlaufend angeordnet, wobei ein Winkel ß (Fig. 4) zwischen den beiden, V-förmig in Richtung zu der Schmelze 5 zueinander verlaufenden Lanzen 117, 119 gebildet ist.

Die beiden im wesentlichen geradlinig ausgebildeten Lanzen 117, 119 weisen im Gegensatz zu der ersten Lanze 17 gemäß dem ersten Ausführungsbeispiel jeweils in Längsrichtung der entsprechenden Lanze verlaufende Austrittsbereiche 123, 125 auf. Die erste Lanze 117 dient wie diejenige 17 gemäß dem ersten Ausführungsbeispiel der Zufuhr eines Gases, beispielsweise von Sauerstoff, und die zweite Lanze 119 dient wie diejenige 19 nach dem ersten Ausführungsbeispiel der Beaufschlagung der Metallschmelze 5 mit feinkörnigen Feststoffen, die beispielsweise mit Luft oder Inertgas als Transportmedium gefördert werden. Dem ersten Ausführungsbeispiel entsprechend behält das aus der Austrittsöffnung 123 der ersten Lanze 117 ausströmende Gas 127 im wesentlichen seine Richtung zur Oberfläche 7 der Schmelze 5 bei. Aufgrund der Anordnung der beiden Lanzen 117, 119 trifft der aus der Austrittsöffnung 125 der zweiten Lanze 119 austretende Förderstrom 129 auf das Gas 127. Dabei wird der Förderstrom 129 entsprechend dem Förderstrom 27 nach dem ersten Ausführungsbeispiel aufgrund der höheren Geschwindigkeit des Gases 127 von diesem aus seiner ursprünglichen Richtung ausgelenkt, und mit dem Gas 127, dessen Richtung im wesentlichen unverändert bleibt, zu der Schmelze 5 hin mitgenommen. In einer dem ersten Ausführungsbeispiel entsprechenden Weise werden somit über die zweite Lanze 119 zugeführte feinkörnige Feststoffe mit dem aus der ersten Lanze 117 austretendem Gas 127 in die Schmelze 5 gefördert. Entsprechend einem gewünschten Beaufschlagungsbereich einer Schmelze 5 bzw. einer zu durchdringenden Schlackenschicht 8 kann die Lageanordnung der ersten und der zweiten Lanze 117, 119 über eine Anpassung der Winkel α und ß geändert werden.

Durch die Anordnung einer ersten und zweiten Lanze 117, 119 nach dem zweiten Ausführungsbeispiel kann beispielsweise Sauerstoff zusammen mit Kohlenstoff als feinkörnigem Feststoff gezielt einem örtlich begrenzten Bereich der Metallschmelze 5 zugeführt werden, und es können ggf. über den Umfang des Gefäßes 3 verteilt mehrere derartige Paare von ersten und zweiten Lanzen 117, 119 angeordnet werden. Es ist ferner auch möglich, daß für eine gezielte Beaufschlagung der Schmelze 5 einem Schmelzgefäß 3 bzw. einem Lichtbogenofen 1 sowohl Lanzen 17, 19, 31 nach dem ersten Ausführungsbeispiel, als auch ein oder mehrere Paare von Lanzen 117, 119 nach dem zweiten Ausführungsbeispiel, zugeordnet werden.

Bereits vorhandene Lichtbogenöfen 1 bzw. Schmelzgefäße 3 können im wesentlichen ohne weitere Maßnahmen mit Lanzen 17, 19, 31 gemäß dem ersten Ausführungsbeispiel versehen werden. Durch Anordnung entsprechender Wandpanele 120 ist ein Nachrüsten auch bezüglich erster und zweiter Lanzen 117, 119 gemäß dem zweiten Ausführungsbeispiel möglich.

## Patentansprüche

1. Verfahren zum zumindest zeitweise gleichzeitigen Beaufschlagen einer Metallschmelze in einem metallurgischen Gefäß mit einem Gas und feinkörnigen Feststoffen, mit einer wassergekühlten ersten Lanze zur Zufuhr des Gases, dadurch **gekennzeichnet**, daß die Feststoffe als Förderstrom (27, 129) über eine zweite Lanze (19, 119) so zugeführt werden, daß sie nach dem Verlassen der Austrittsöffnung (25, 125) der zweiten Lanze (19, 119) von aus der Austrittsöffnung (23, 123) der ersten Lanze (17, 117) austretendem Gas (29, 127) umgelenkt und mit diesem der Metallschmelze (5) zugeführt werden.

2. Verfahren nach Anspruch 1 dadurch **gekennzeichnet**, daß das Gas (29, 127) mit einer im Überschallbereich liegenden Geschwindigkeit aus der Austrittsöffnung (23, 123) der ersten Lanze (17, 117) austritt.

3. Verfahren nach Anspruch 2, dadurch **gekennzeichnet**, daß das Gas (29, 127) mit etwa 2,5-facher Schallgeschwindigkeit aus der ersten Lanze (17, 117) austritt.

4. Verfahren nach einem der Ansprüche 1 bis 3, dadurch **gekennzeichne**t, daß der Förderstrom (27, 129) mit einer Geschwindigkeit von etwa 20 m/s bis 50 m/s aus der Austrittsöffnung (25, 125) der zweiten Lanze (19, 119) austritt.

5. Verfahren nach einem der Ansprüche 1 bis 4, dadurch **gekennzeichnet**, daß als Gas Sauerstoff zugeführt wird.

6. Verfahren nach einem der Ansprüche 1 bis 5, dadurch **gekennzeichnet**, daß als Feststoff feinkörniger Kohlenstoff zugeführt wird.

7. Verfahren nach einem der Ansprüche 1 bis 6, dadurch **gekennzeichnet**, daß als feinkörniger Stoff Schlackenbildner und/oder metallurgische Mittel zur Behandlung der Metallschmelze (5) zugeführt werden.

8. Verfahren nach einem der Ansprüche 1 bis 7, dadurch **gekennzeichnet**, daß als Feststoffe Hüttenstäube, wie unbehandelte Filterstäube und/oder Zunder oder Feinerze bzw. deren Sinterprodukte zuführbar sind.

9. Verfahren nach einem der Ansprüche 1 bis 8, dadurch **gekennzeichnet**, daß die Feststoffe eine Korngröße von etwa 0,01 mm bis 1 mm aufweisen.

10. Verfahren nach einem der Ansprüche 1 bis 9, dadurch **gekennzeichnet**, daß über eine dritte Lanze (31) eine weiteres Gas und/oder weitere feinkörnige Feststoffe zuführbar sind.

11. Verfahren nach Anspruch 10, dadurch **gekennzeichnet**, daß der Gas- oder ein Förderstrom aus der dritten Lanze (31) im wesentlichen unbeeinflußt von dem aus der ersten Lanze (17, 117) austretendem Gas (29, 127) und dem aus der zweiten Lanze (19, 119) austretenden Förderstrom (27, 129) dem Gefäßinneren zugeführt wird.

12. Verfahren nach Anspruch 10 oder 11 dadurch **gekennzeichnet**, daß über die dritte Lanze (31) Sauerstoff im wesentlichen einem Bereich unmittelbar oberhalb des Badspiegels der Metallschmelze (5) und innerhalb einer darüber liegenden Schlackenschicht (8) zuführbar ist.

13. Verfahren nach einem der Ansprüche 1 bis 12, dadurch **gekennzeichnet**, daß Feststoffe über eine oder mehrere Lanzen (19, 119) intermittierend zugeführt werden.

14. Verfahren nach einem der Ansprüche 1 bis 13, dadurch **gekennzeichnet**, daß das metallurgische Gefäß (3) Teil eines Lichtbogenofens (1) ist.

15. Vorrichtung zum zumindest zeitweise gleichzeitigen Beaufschlagen einer Metallschmelze in einem metallurgischen Gefäß mit einem Gas und feinkörnigen Feststoffen, die eine wassergekühlte erste Lanze (17, 117) für die Zufuhr des Gases (29, 127) enthält, deren Austrittsöffnung (23, 123) oberhalb des Badspiegels der Schmelze angeordnet und auf den Badspiegel ausgerichtet ist, dadurch gekennzeichnet, daß eine wassergekühlte zweite Lanze (19, 119) für die Zufuhr der feinkörnigen Feststoffe mit der ersten Lanze (17, 117) derart verbunden ist, daß ein aus der zweiten Lanze (19, 119) ausgestoßener Strahl feinkörniger Feststoffe den Gasstrahl der ersten Lanze (17, 117) oberhalb des Badspiegels schneidet.

16. Vorrichtung nach Anspruch 15, dadurch **gekennzeichnet**, daß die erste Lanze (17) ein abgewinkeltes Ende aufweist und die zweite Lanze (19) im wesentlichen geradlinig ausgebildet ist.

17. Vorrichtung nach Anspruch 15 oder 16, dadurch **gekennzeichnet**, daß im Ende der ersten Lanze (17, 117) eine Laval-Düse zur Erzeugung einer Überschallgeschwindigkeit für das austretende Gas (29, 127) angeordnet ist.

18. Vorrichtung nach einem der Ansprüche 15 bis 17, **gekennzeichnet** durch die Anordnung einer dritten Lanze (31) für eine Gas- oder Festkörperzufuhr.

19. Vorrichtung nach Anspruch 18, dadurch **gekennzeichnet**, daß die Austrittsöffnung der dritten Lanze (31) gegenüber den Austrittsöffnungen (23, 25) der ersten und zweiten Lanze (17, 19) bewegbar ist.

20. Vorrichtung nach einem der Ansprüche 15 bis 19, dadurch **gekennzeichnet**, daß einer oder mehreren Lanzen (17, 19, 31; 117, 119) Steuereinrichtungen für eine intermittierende Zufuhr eines Gases oder von Feststoffen zugeordnet sind.

21. Vorrichtung nach einem der Ansprüche 15 bis 20, dadurch **gekennzeichnet**, daß jede der Lanzen (17, 19, 31) mit einem Manipulator (21) verbunden und durch diesen bewegbar ist.

22. Vorrichtung nach einem der Ansprüche 15 bis 20, dadurch **gekennzeichnet**, daß die erste und die zweite Lanze (117, 119) durch ein Wandpanel (120) des Gefäßes (3) geführt sind.

23. Vorrichtung nach Anspruch 22 dadurch **gekennzeichnet**, daß die erste und die zweite Lanze (117, 119) zumindest teilweise gegenüber dem Inneren des Gefäßes (3) durch Kühlrohre (121) abgeschirmt sind.

24. Vorrichtung nach Anspruch 22 oder 23 dadurch **gekennzeichnet**, daß die Lanzen (117, 119) im wesentlichen geradlinig mit jeweils in Längsrichtung verlaufenden Austrittsbereichen (123, 125) ausgebildet sind.

25. Vorrichtung nach Anspruch 22 bis 24 dadurch **gekennzeichnet**, daß über den Umfang des Gefäßes (3) mehrere Paare von ersten und zweiten Lanzen (117, 119) angeordnet sind.

## Claims

1. A process for at least at times sinultaneously supplying a molten metal in a metallurgical vessel with a gas and fine-grain solid materials, with a water-cooled first lance for the supply of the gas, characterised in that the solid materials are supplied in the form of a delivery stream (27, 129) by way of a second lance (19, 119) in such a way that, after leaving the outlet opening (25, 125) of the second lance (19, 119), the solid materials are deflected by gas (29, 127) issuing from the outlet opening (23, 123) of the first lance (17, 117) and are supplied with said gas to the molten metal (5).

2. A process according to claim 1 characterised in that the gas (29, 127) issues from the outlet opening (23, 123) of the first lance (17, 117) at a velocity which is in the supersonic range.

3. A process according to claim 2 characterised in that the gas (29, 127) issues from the first lance (17, 117) at about 2.5 times the velocity of sound.

4. A process according to one of claims 1 to 3 characterised in that the delivery strean (27, 129) issues from the outlet opening (25, 125) of the second lance (19, 119) at a velocity of about 20 m/s to 50 m/s.

5. A process according to one of claims 1 to 4 characterised in that the gas supplied is oxygen.

6. A process according to one of claims 1 to 5 characterised in that the solid material supplied is fine-grain carbon.

7. A process according to one of claims 1 to 6 characterised in that the fine-grain material supplied is slag-forming agents and/or metallurgical agents for treatment of the molten metal (5).

8. A process according to one of claims 1 to 7 characterised in that the solid materials supplied are blast furnace dusts such as untreated filter dusts and/or scale or fine ores or sintered products thereof.

9. A process according to one of claims 1 to 8 characterised in that the solid materials are of a grain size of about 0.01 mm to 1 mn.

10. A process according to one of claims 1 to 9 characterised in that a further gas and/or further fine-grain solid materials can be supplied by way of a third lance (31).

11. A process according to claim 10 characterised in that the gas or a delivery stream is supplied to the interior of the vessel from the third lance (31) substantially unaffected by the gas (29, 127) issuing from the first lance (17, 117) and the delivery stream (27, 129) from the second lance (19, 119).

12. A process according to claim 10 or claim 11 characterised in that oxygen can be supplied by way of the third lance (31) substantially to a region directly above the surface of the bath of molten metal (5) and within a layer of slag (8) disposed thereabove.

13. A process according to one of claims 1 to 12 characterised in that solid materials are intermittently supplied by way of one or more lances (19, 119).

14. A process according to one of claims 1 to 13 characterised in that the metallurgical vessel (3) is part of an electric arc furnace (1).

15. Apparatus for at least at times simultaneously supplying a molten metal in a metallurgical vessel with a gas and fine-grain solid materials, which includes a water-cooled first lance (17, 117) for the supply of the gas (29, 127), the outlet opening (23, 123) of which is arranged above the surface of the bath of molten metal and is directed on to the surface of the bath, characterised in that a water-cooled second lance (19, 119) for the supply of the solid materials is connected to the first lance (17, 117) in such a way that a jet of fine-grain solid materials ejected from the second lance (19, 119) intersects the gas jet of the first lance (17, 117) above the surface of the bath.

16. Apparatus according to claim 15 characterised in that the first lance (17) has an angled end and the second lance (19) is of a substantially rectilinear configuration.

17. Apparatus according to claim 15 or claim 16 characterised in that disposed in the end of the first lance (17, 117) is a Laval nozzle for producing a supersonic velocity for the issuing gas (29, 127).

18. Apparatus according to one of claims 15 to 17 characterised by the arrangement of a third lance (31) for a supply of gas or solid material.

19. Apparatus according to claim 18 characterised in that the outlet opening of the third lance (31) is movable relative to the outlet openings (23, 25) of the first and second lances (17, 19).

20. Apparatus according to one of claims 15 to 19 characterised in that control means for an intermittent supply of a gas or solid materials are associated with one or more lances (17, 19, 31; 117, 119).

21. Apparatus according to one of claims 15 to 20 characterised in that each of the lances (17, 19, 31) is connected to a manipulator (21) and is movable by same.

22. Apparatus according to one of claims 15 to 20 characterised in that the first and second lances (117, 119) are passed through a wall panel (120) of the vessel (3).

23. Apparatus according to claim 22 characterised in that the first and second lances (117, 119) are at least partially screened relative to the interior of the vessel (3) by cooling pipes (121).

24. Apparatus according to claim 22 or claim 23 characterised in that the lances (117, 119) are of substantially linear configuration with respective outlet regions (123, 125) respectively extending in the longitudinal direction.

25. Apparatus according to claims 22 to 24 characterised in that a plurality of pairs of first and second lances (117, 119) are arranged around the circumference of the vessel (3).

## Revendications

1. Procédé d'introduction simultanée au moins par intermittence d'un gaz et de matières solides en grains fins dans un métal fondu dans un récipient métallurgique, comprenant une première lance à refroidissement par de l'eau pour envoyer le gaz, caractérisé en ce qu'il consiste à amener les matières solides sous la forme d'un courant (27, 129) de transport par une deuxième lance (19,119), de façon qu'après avoir quitté l'orifice (25,125) de sortie de la deuxième lance (19,119), elles soient déviées par du gaz (29,127) sortant de l'orifice (23,123) de sortie de la première lance (17,117) et qu'elles soient envoyées avec celui-ci au métal fondu (5).

2. Procédé suivant la revendication 1, caractérisé en ce que le gaz (29,127) sort de l'orifice (23,123) de sortie de la première lance (17,117) à une vitesse supérieure à la vitesse du son.

3. Procédé suivant la revendication 2, caractérisé en ce que le gaz (29,127) sort de la première lance (17,117) à environ 2,5 fois la vitesse du son.

4. Procédé suivant l'une des revendications 1 à 3, caractérisé en ce que le courant (27,129) de transport sort de l'orifice (25,125) de sortie de la deuxième lance (19,119) à une vitesse d'environ 20 m/s à 50 M/s.

5. Procédé suivant l'une des revendications 1 à 4, caractérisé en ce qu'il consiste à envoyer comme gaz de l'oxygène.

6. Procédé suivant l'une des revendications 1 à 5, caractérisé en ce qu'il consiste à envoyer comme matière solide du carbone en grains fins.

7. Procédé suivant l'une des revendications 1 à 6, caractérisé en ce qu'il consiste à envoyer comme substance en grains fins du fondant de scorification et/ou des agents métallurgiques de traitement du métal fondu (5).

8. Procédé suivant l'une des revendications 1 à 7, caractérisé en ce que l'on peut envoyer comme matière solide de la poussière sidérurgique comme de la poussière de filtre non traitée et/ou de la calamine ou des fines de minerai ou leurs produits de frittage.

9. Procédé suivant l'une des revendications 1 à 8, caractérisé en ce que les matières solides ont une granulométrie de 0,01 mm à 1 mm environ.

10. Procédé suivant la revendication 9, caractérisé en ce qu'un autre gaz et/ou une autre matière solide en grains fins peut être amené par une troisième lance (31).

11. Procédé suivant la revendication 10, caractérisé en ce que le courant de gaz ou un courant de transport sortant de la troisième lance (31) est amené sans être sensiblement influencé par le gaz (29,127) sortant de la première lance et par le courant (27,129) de transport sortant de la deuxième lance (19,119) à l'intérieur du récipient.

12. Procédé suivant la revendication 10 ou 11, caractérisé en ce que de l'oxygène peut être amené par la troisième lance (31) sensiblement dans une région juste au-dessus du niveau du bain de métal fondu (5) et dans une couche (8) de scories se trouvant au-dessus de ce niveau.

13. Procédé suivant l'une des revendications 1 à 12, caractérisé en ce que des matières solides peuvent être amenées par intermittence par une ou par plusieurs lances (19,119).

14. Procédé suivant l'une des revendications 1 à 13, caractérisé en ce que le récipient (3) métallurgique fait partie d'un four à arc (1).

15. Installation d'introduction simultanée au moins par intermittence d'un gaz et de matières solides en grains fins dans un métal fondu dans un récipient métallurgique, qui comporte une première lance (17,117) à refroidissement par de l'eau destinée à amener le gaz (29,127) et dont l'orifice (23,123) de sortie est au-dessus du niveau du métal fondu et est dirigé sur ce niveau, caractérisée en ce qu'une deuxième lance (19,129) à refroidissement par de l'eau est destinée à l'amenée de matières solides en grains fins et est reliée à la première lance (17,117) de sorte qu'un jet de matières solides en grains fins issu de la deuxième lance (19,119) coupe le jet de gaz de la première lance (17,117) au-dessus du niveau du bain.

16. Installation selon la revendication 15, caractérisée en ce que la première lance (17) comporte une extrémité coudée et la deuxième lance (19) est sensiblement rectiligne.

17. Installation selon la revendication 15 ou 16, caractérisée en ce qu'il est prévu, à l'extrémité de la première lance (17,117), une tuyère de Laval pour donner au gaz (29,127) qui sort une vitesse supérieure à la vitesse du son.

18. Installation selon l'une des revendications 15 à 17, caractérisée en ce qu'il est prévu une troisième lance (31) pour l'amenée d'un gaz ou de matières solides.

19. Installation selon la revendication 18, caractérisée en ce que l'orifice de sortie de la troisième lance (31) est mobile par rapport aux orifices (23,25) de sortie des première et deuxième lances (17,19).

20. Installation selon l'une des revendications 15 à 19, caractérisée en ce qu'il est associé à une ou à plusieurs lances (17,19,31; 117,119) des dispositifs de commande permettant l'envoi par intermittence d'un gaz ou de matières solides.

21. Installation selon l'une des revendications 15 à 20, caractérisée en ce que chacune des lances (17,29,31) est reliée à un manipulateur (21) et peut être déplacée par celui-ci.

22. Installation selon l'une des revendications 15 à 20, caractérisée en ce que la première et la deuxième lances (117,119) passent à travers un panneau (120) formant la paroi du récipient (3).

23. Installation selon la revendication 22, caractérisée en ce que la première et la deuxième lances (117,119) sont protégées au moins partiellement de l'intérieur du récipient (3) par des tubes (121) de refroidissement.

24. Installation selon la revendication 22 ou 23, caractérisée en ce que les lances (117,119) sont sensiblement rectilignes en ayant des parties (123,125) de sortie s'étendant dans la direction longitudinale.

25. Installation selon les revendications 22 à 24, caractérisé en ce qu'il est prévu plusieurs paires de première et deuxième lances (117,119) réparties sur le pourtour du récipient (3).
